# EUROPÄISCHE PATENTSCHRIFT

(11) **EP 2 114 804 B1**
(45) Veröffentlichungstag und Bekanntmachung des Hinweises auf die Patenterteilung: **25.05.2011**
(21) Anmeldenummer: 08706878.9
(22) Anmeldetag: 07.02.2008
(51) Int. Cl.: B65G 47/90, B29C 49/42

(54) **VORRICHTUNG ZUR BLASFORMUNG VON BEHÄLTERN**
DEVICE FOR BLOW MOULDING CONTAINERS
DISPOSITIF DE MOULAGE PAR SOUFFLAGE DE CONTENEURS

(30) Priorität: 08.03.2007 DE 102007011923
(43) Veröffentlichungstag der Anmeldung: 11.11.2009
(73) Patentinhaber: KHS Corpoplast GmbH, 22145 Hamburg (DE)
(72) Erfinder: LITZENBERG, Michael, 21502 Geesthacht (DE); LINKE, Michael, 22047 Hamburg (DE); BAUMGARTE, Rolf, 22926 Ahrensburg (DE); LEWIN, Frank, 22889 Tangstedt (DE)
(74) Vertreter: Klickow, Hans-Henning
(86) Internationale Anmeldenummer: PCT/DE2008/000254
(87) Internationale Veröffentlichungsnummer: WO 2008/106922

(56) Entgegenhaltungen:
- WO-A-00/76746
- WO-A-2006/077050
- WO-A-2007/110157
- WO-A-2008/009410
- DE-A1-102005 010 481
- DE-U1- 20 001 408
- US-A- 4 858 980

## Beschreibung

Die Erfindung betrifft eine Vorrichtung zur Blesformung von Behältern mit einem Handhabungelement zur halterung von Vorformlingen oder Behältern, wobei das Handhabungselement zangenartig ausgebildet und mit zwei Zangenarmen versehen ist.

Eine solche Vorrichtung ist zum Beispiel aus der DE-OS 199 06 438 bekannt. Hierbei kann vorgesehen sein, daß das Tragelement von einem rotierenden Übergaberad gehalten ist, relativ zu dem das Tragelement beweglich gelagert ist, sowie daß eine Kurvensteuerung für das Tragelement verwendet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden vorformling eingeleitet wird. Der verfahrenstechnische Ablauf bei einer derartigen Expansion des vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innehalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführt Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Handhabung der Vorformlinge und zur Handhabung der geblasenen Behälter werden innerhalb der Blasmaschine häufig sogenannte Übergaberäder verwendet, die mit Tragelementen für die Vorformlinge oder Flaschen ausgestattet sind. Die Tragelemente können hierbei entweder direkt auf die Vorformlinge oder Flaschen zugreifen, oder separate Transportelemente befördern, die ihrerseits direkt die Vorformlinge oder Flaschen haltern.

Zur Unterstützung von Übergabevorgängen sind die Tragelemente relativ zum Übergaberad typischerweise verschwenkbar gelagert. Zusätzlich ist häufig auch eine Teleskopierbarkeit realisiert. Zur Positionsvorgabe für die Tragelemente werden Kurvensteuerungen verwendet. Die Tragelemente werden hierbei mit Kurvenrollen an ortsfest angeordneten Kurven vorbeigeführt.

Ein Problem bei der Verwendung von derartigen mit Tragelementen versehenen Übergaberädern besteht darin, bei einem Auftreten von mechanischen Störungen, insbesondere bei einem Auftreten von Kollisionen, schwere Schäden zu vermeiden. Hierzu ist es bekannt, die Tragarme unter Verwendung von überlastkupplungen im Bereich der übergaberäder zu lagern. Derartige Überlastkupplungen sind zum einen teuer und vergrößern darüber hinaus das Baugewicht der rotierenden Übergaberäder.

Es ist ebenfalls bereits bekannt, die Tragarme mit aktiven Positionierelementen auszustatten, die pneumatisch oder elektrisch ein Ausfahren bzw. Einfahren der Tragarme derart vorgeben, daß diese in einer Arbeitspositionierung oder einer Ruhepositionierung angeordnet sind. Entsprechende Positioniereinrichtungen verursachen jedoch relativ hohe Kosten und vergrößern das Baugewicht des Übergaberades, so daß vergrößerte Trägheitseigenschaften auftreten.

Ein weiteres Problem bei der Verwendung von zangenartigen Halterungselementen besteht darin, daß diese vergleichsweise teuer sind und bei einem Auftreten von verschleiß oder mechanischen Beschädigungen eine Auswechslung der Zangen einen entsprechend großen Arbeitsaufwand und hiermit im Zusammenhang stehende Arbeitskosten zur Folge hat.

Aus der wo 2008/009410 A ist ein zangenartiges Halteelement für Füllmaschinen bekannt, bei dem eine Sollbruchstelle vorgesehen ist, um bei einer Überlast einen definierten Materialbruch zu ermöglichen. Das Halteelement weist zwei Zangenarme und eine Zangenbasis auf, wobei die Zangenarme gemansam mit der Zangenbasis eingtückig und aus einem elastischen Material ausgebildet sind. Die Zangenbasis des Halteelementes ist in ein Grundelament eingerastet.

In der WO 2007/110157 A wird ein zangenartiges Element mit Festkörpergelenken beschrieben, das im Bereich eines Tragelementes fixierbar ist. Eine ähnliche Einrichtung zur Verwendung im Bereich von Füllmaschinen ist auch aus der WO 2006/077050 A bekannt.

Die Dockumente wo 2008/009410 A und wo 2007/110157 A fallen unter Art.54(3)EPU.

In der US 4,858,980 A wird ein zangenartiges Halteelement mit Festkörpergelenk zur Verwendung im Bereich von Produktmagazinen beschrieben.

Aus der DE 20 001 408 Ul ist eine Halteeinrichtung für die mobile Mitführung von Getränkeflaschen bekannt, bei der eine Halteklammer für einen Flaschenkörper und eine Halteklammer für einen Flaschenhals verwendet werden. Ein Basisteil des Halteelementes für den Flaschenhals ist mit einem Basisteil für das Halteelement für den Flaschenkörper zusammensteckbar.

In der DE 10 2005 010 481 A1 wird ein klammerartiges Halteelement zum Transport von Nieten beschrieben.

Aufgabe der vorliegenden Erfindung ist es, eine Vorrichtung der einleitend genannten Art derart zu konstruieren, daß bei einfachem konstruktiven Aufbau eine hohe Betriebssicherheit unterstützt wird.

Diese Aufgabe wird durch die Vorrichtung des Anspruchs 1 gelöst.

Die einteilige Konstruktion des zangenartigen Halterungselementes aus den Zangenarmen und der Zangenbasis ermöglicht eine äußerst preiswerte Fertigung des Bauteiles. Aufgrund der einstückigen Ausbildung entfallen eine Vielzahl von Montagearbeiten und das komplette Halterungselement für die Werkstücke braucht lediglich im Bereich einer vorgesehenen Verwendung positioniert zu werden. Ebenfalls entfallen Wartungsoder Reparaturarbeiten, da das Halterungselement aufgrund seiner preiswerten Fertigung als verschleißteil ausgebildet werden kann, das bedarfsabhängig einfach ausgewechselt wird.

Insbesondere ist es auch möglich, das Halterungselement mechanisch derart nachgiebig zu konstruieren, daß bei einem Auftreten von Kollisionen ein definiertes Abbrechen realisiert wird. Aufwendige Positioniereinrichtungen können hierdurch vermieden werden. Ebenfalls können Schäden an höherwertigen Bauteilen vermieden werden. Als Werkstücke können beispielsweise vorformlinge oder Behälter vom Halterungselement beaufschlagt werden.

weiter auf Seite 6 der Ursprungsunterlagen

Erfindungsgemäβ ist die Zangenbasis in ein Grundelement eingerastet, zur. Minimierung des verschleißbedingt oder produktabhängig auswechselbaren Handhabungselementes

Eine einfache Montage und Demontage wird dadurch unterstützt, daß die Zangenbasis mindestens eine Federzunge zur Arretierung im Bereich einer Aufnahme des Grundelementes aufweist.

Ein manuelles Auswechseln des Zangenteiles wird dadurch erleichtert, daß die Federzunge manuell entriegelbar ist.

Eine äußerst preiswerte Realisierung, die insbesondere auch eine Herstellung im Spritzgußverfahren unterstützt, wird dadurch bereitgestellt, daß die zangenbasis und die Zangenarme aus Kunststoff ausgebildet sind.

Eine typische Anwendung besteht darin, daß das Grundelement an einem umlaufenden Förderelement befestigt ist.

Beispielsweise ist daran gedacht, daß das Förderelement als eine Kette ausgebildet ist.

Ein weiteres Anwendungsgebiet wird dadurch erschlossen, daß das Förderelement als ein Übergaberad ausgebildet ist.

In den Zeichnungen sind Ausführungsbeispiele der Erfindung schematisch dargestellt. Es zeigen:
- Fig. 1: Eine perspektivische Darstellung einer Blas- station zur Herstellung von Behältern aus Vor- formlingen,
- Fig. 2: einen Längsschnitt durch eine Blasform, in der ein Vorformling gereckt und expandiert wird,
- Fig. 3: eine Skizze zur veranschaulichung eines grund- sätzlichen Aufbaus einer Vorrichtung zur Blas- formung von Behältern,
- Fig. 4: eine modifizierte Heizstrecke mit vergrößerter Heizkapazität,
- Fig. 5: eine perspektivische Darstellung eines Überga- berades mit einer Mehrzahl von positionierba- ren Tragarmen,
- Fig. 6: eine perspektivische Darstellung eines zangen- artigen Handhabungselementes,
- Fig. 7: das Handhabungselement gemäß Fig. 6 bei einer perspektivischen Ansicht von unten,
- Fig. 8: das Handhabungselement gemäß Fig. 7 nach einem Herausziehen einer Zangenbasis aus einem Grundelement und
- Fig. 9: die Anordnung gemäß Fig. 8 in einer perspekti- vischen Ansicht von unten.

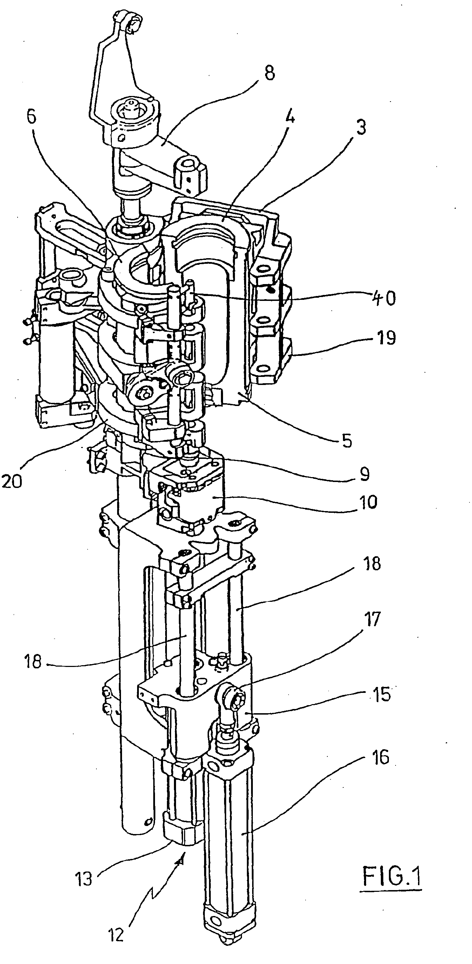

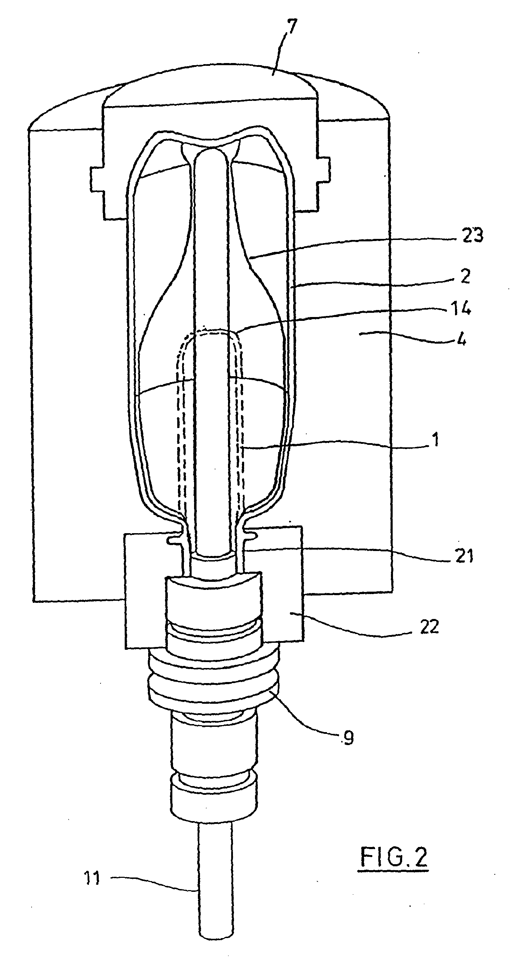

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

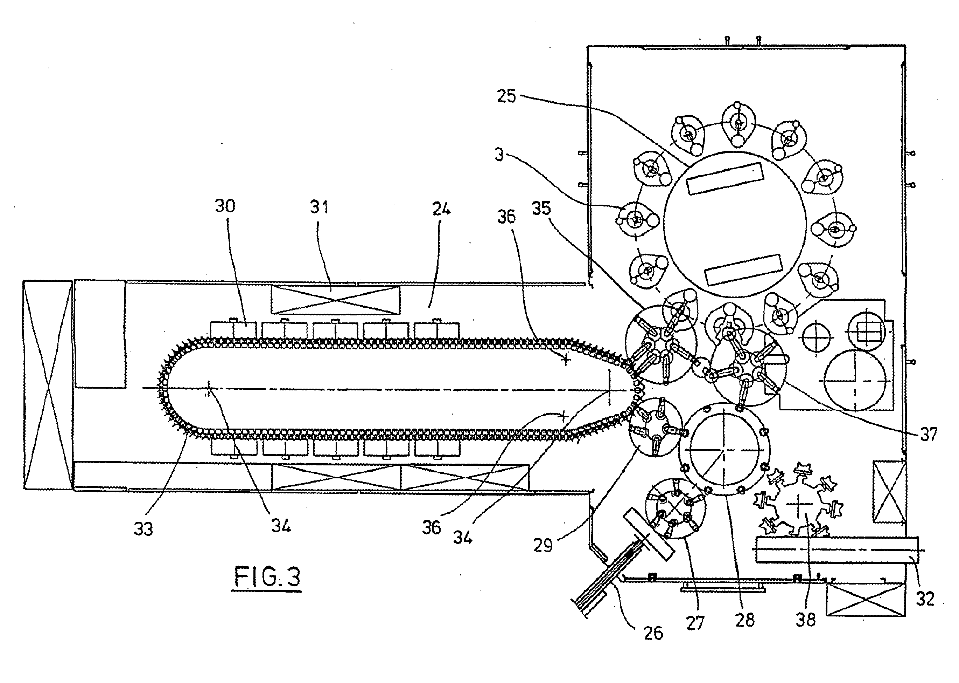

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. während der vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesent-lichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

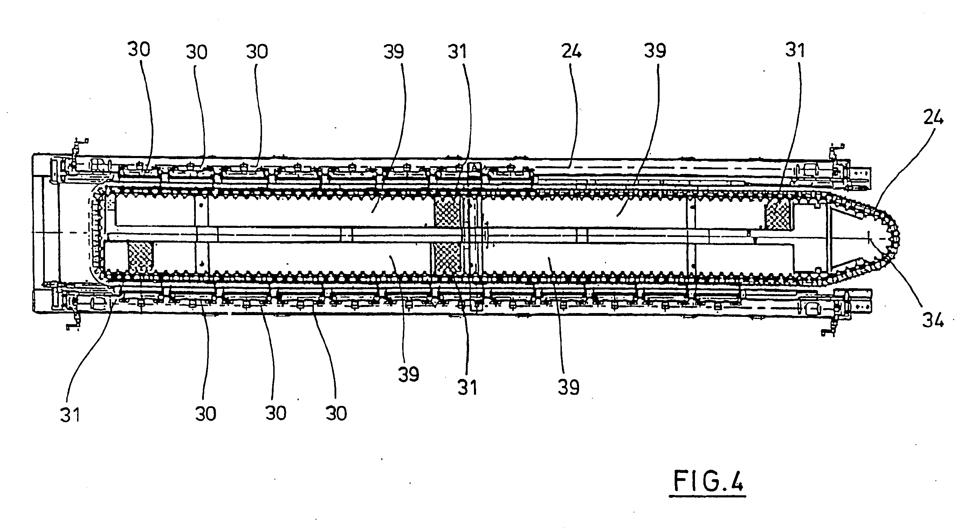

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

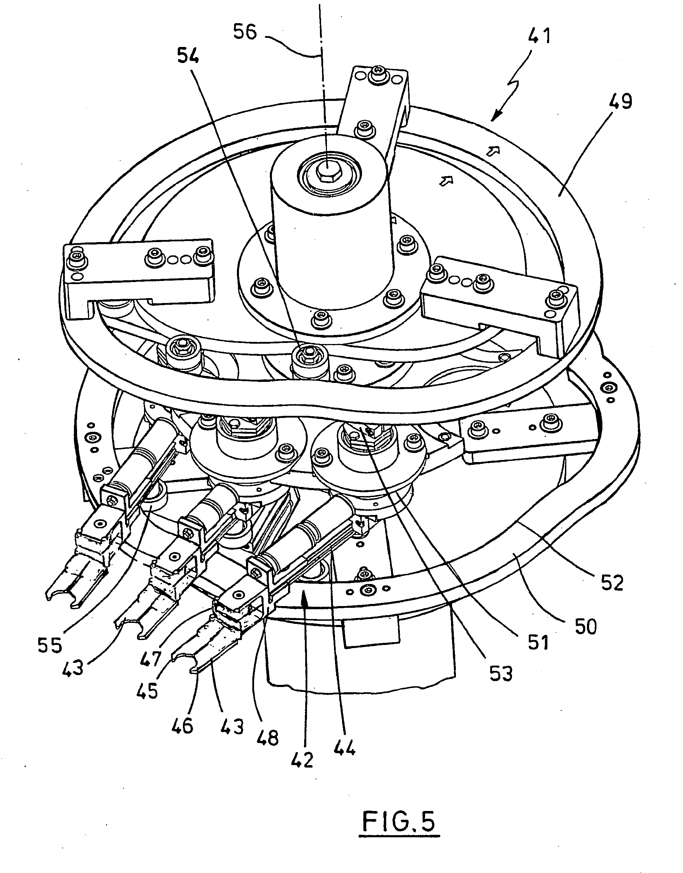

Fig. 5 zeigt ein Übergaberad (41), das beispielsweise an die Positionen für mindestens eines der Übergaberäder (27, 28, 29) eingebaut werden kann. Das Übergaberad (41) ist mit Tragelementen (42) versehen, die zur Handhabung von Vorformlingen (1) und/oder Behältern (2) dienen. Beim dargestellten Ausführungsbeispiel ist das Tragelement (42) aus einem Handhabungselement (43) und einem Tragarm (44) ausgebildet. Das Handhabungselement (43) ist beim dargestellten Ausführungsbeispiel zangenartig realisiert und weist zwei, Zangenarme (45, 46) auf, die einstückig mit einer Zangenbasis (47) ausgebildet sind. Die Zangenbasis (47) ist in ein Grundelement (48) einrastbar, das vom Tragarm (44) gehalten ist. Derartige Handhabungselemente (43) ergreifen die Vorformlingen (1) oder Behälter (2) direkt. Die Handhabungselemente (43) können aber auch derart realisiert sein, daß ein Kontakt mit Transportelementen vorgesehen ist, die ihrerseits die Vorformlinge (1) oder Behälter (2) tragen. Ein derartiges Transportelement kann beispielsweise als Transportdorn (9) realisiert sein, auf den die Vorformlinge (1) aufgesteckt werden oder in den die Vorformlinge (1) mit ihrem Mündungsbereich eingeführt werden.

Fig. 5 veranschaulicht, daß zur Steuerung von Positionierbewegungen der Tragelemente (42) zwei Kurvenbahnen (49, 50) verwendet sind, die in vertikaler Richtung übereinander angeordnet sind. Die Tragarme (44) sind über Schwenkgelenke (51) an einem Zentralelement (52) des Übergaberades (41) befestigt. Im Bereich der Schwenkgelenke (51) weisen die Tragarme (54) Querhebel (53) auf, die über eine Kurvenrolle (54) entlang der Kurvenbahn (49) geführt sind. Bei einer Rotation des Zentralelementes (52) werden hierdurch Schwenkbewegungen der Tragarme (44) vorgegeben. Bei dem dargestellten Ausführungsbeispiel sind die Kurvenrollen (54) innenseitig entlang der Kurvenbahn (49) geführt.

Die Tragarme (44) sind teleskopierbar ausgebildet und unter Verwendung einer Kurvenrolle (55) entlang der Kurvenbahn (50) geführt, um eine Teleskopierbewegung des Tragarmes (44) vorzugeben. Bei dem dargestellten Ausführungsbeispiel ist auch die Kurvenrolle (55) innenseitig entlang der Kurvenbahn (50) geführt. Bei einem typischen Arbeitsablauf rotiert das Übergaberad (41) um seine Drehachse (56) herum.

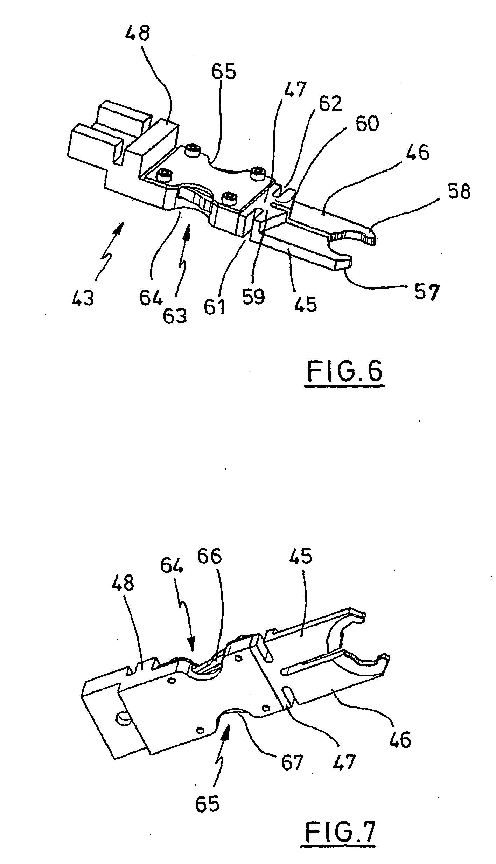

Fig. 6 veranschaulicht in einer perspektivischen und vergrößerten Darstellung die Konstruktion des Grundelementes (48) und der Zangenbasis (47) mit den Zangenarmen (45, 46). Es ist erkennbar, daß die Zangenarme (45, 46) Greifenden (57, 58) aufweisen, die zur teilweisen Umschließung eines Halsbereiches eines Vorformlings (1) oder eines Behälters (2) ausgebildet sein können. Die Zangenarme (45, 46) sind über vergleichsweise dünn ausgebildete verjüngungen (59, 60) mit der Zangenbasis (47) verbunden. Hierdurch werden Festkörpergelenke bereitgestellt.

Die Verjüngungen (59, 60) können beispielsweise dadurch bereitgestellt werden, daß im übergangsbereich der Zangenarme (45, 46) zur Zangenbasis (47) Nuten (61, 62) angeordnet sind, in deren Bereich sich der Materialquerschnitt verkleinert.

Die Zangenbasis (47) ist in eine Aufnahme (63) des Grundelementes (48) hineingesteckt und in dieser Aufnahme (63) eingerastet. Das Grundelement (48) kann mit dem Tragarm (44) verschraubt oder in anderer Art und Weise verbunden sein.

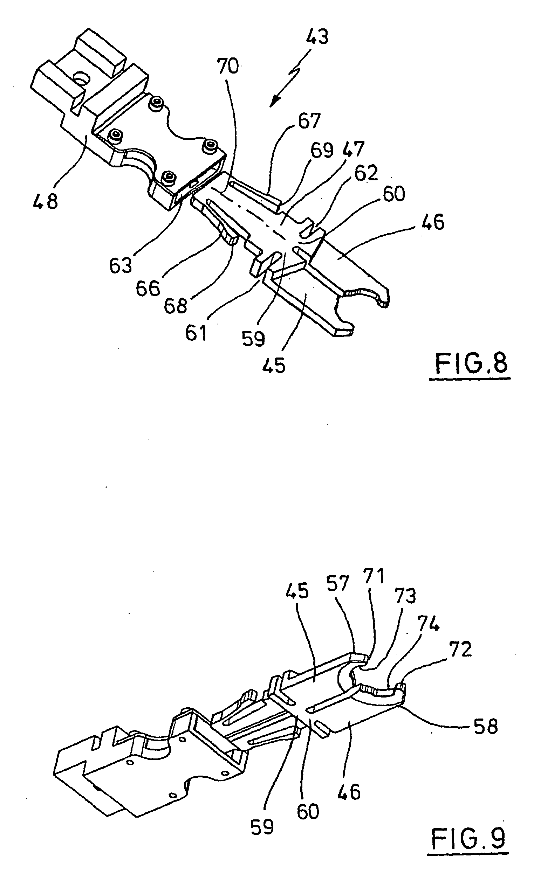

Fig. 7 zeigt das Handhabungselement (43) in einer perspektivischen Darstellung von unten. Es ist insbesondere zu erkennen, daß das Grundelement (48) Ausnehmungen (64, 65) aufweist, die einen Zugang zur Aufnahme (63) ermöglichen. Im Bereich der Ausnehmungen (64, 65) sind nach einem Einrasten der Zangenbasis (47) im Grundelement (48) Federzungen (66, 67) der Zangenbasis (47) positioniert. Die Federzungen (66, 67) hintergreifen mit Anschlagflächen (68, 69), die in Fig. 8 zu erkennen sind, korrespondierende Absätz des Grundelementes (48).

Fig. 8 zeigt in einer perspektivischen Darstellung eine aus dem Grundelement (48) herausgezogene Zangenbasis (47). Es ist hier insbesondere zu erkennen, daß die Federzungen (66, 67) einteilig an der Zangenbasis (47) angeformt und über Festkörpergelenke mit der Zangenbasis (47) verbunden sind.

Vorzugsweise sind die Federzungen (66, 67) seitlich an der Zangenbasis (47) angeformt, um eine manuelle Entriegelung zu unterstützen.

In Richtung einer zangenlängsachse (70) verlaufen die Federzungen (66, 67) mit ihren äußeren Begrenzungen schräg zur Zangenlängsachse (70) und in einer sich vom Grundelement (48) entfernenden Richtung mit einem zunehmenden Abstand von der zangenlängsachse (70).

Bei einem Einschieben der Zangenbasis (47) in die Aufnahme (63) erfolgt hierdurch automatisch ein Einfedern durch ein Entlanggleiten der äußeren Begrenzungen der Federzungen (66, 67) an den zugeordneten Begrenzungsflächen der Aufnahme (63). Nach einem vollständigen Einschieben des hierfür vorgesehenen Bereiches der Zangenbasis (47) in die Aufnahme (63) rasten die Federzungen (66, 67) selbsttätig mit ihren Anschlagflächen (68, 69) hinter den korrespondierenden Vorsprüngen des Grundelementes (48) ein.

Vor einem Herausziehen der Zangenbasis (47) aus der Aufnahme (63) erfolgt der bereits erläuterte manuelle Druck auf die Federzungen (66, 67), so daß die Anschlagflächen (68, 69) wieder freigegeben sind.

Fig. 9 zeigt die Anordnung gemäß Fig. 8 nochmals in einer perspektivischen Darstellung von unten. Zur Handhabung eines Werkstückes wird diese typischerweise in Richtung der Zangenlängsachse (70) zwischen die Zangenarme (45, 46) eingeführt. Im Bereich ihrer Greifenden (57, 58) sind die Zangenarme (45, 46) hierzu mit Einführanschrägungen (71, 72) versehen. Bei einem Einführen des Werkstückes führen die Zangenarme (45, 46) hierdurch eine Schwenkbewegung um die die Festkörpergelenke bereitstellenden Verjüngungen (59, 60) herum durch und federn anschließend zurück. Das Einführen des Werkstückes kann beispielsweise unter Verwendung sogenannter Anweiser erfolgen.

Bei der Entnahme des Werkstückes aus dem Handhabungselement (43) kann ebenfalls ein Herausziehen in Richtung der Zangenlängsachse (70) erfolgen. Im Bereich der Greifenden (57, 58) sind hierfür Entnahmeanschrägungen (73, 74) vorgesehen. Sowohl die Einführanschrägungen (71, 72) als auch die Entnahmeanschrägungen (73, 74) sind derart konturiert, das vorgegebene zug- oder Druckkräfte in Richtung der zangenlängsachse (70) die federnde Ausweichbewegung der Zangenarme (45, 46) um die verjüngungen (59, 60) herum verursachen. Das Handhabungselement (43) kann hierdurch als ein vollkommen passives und somit preiswertes Bauteil ausgeführt sein.

Neben der vorstehend erläuterten Verwendung des Handhabungselementes (43) im Bereich eines Übergaberades (41) einer Blasmaschine sind auch eine Vielzahl anderer Anwendungen denkbar. Im Bereich von Blasmaschinen können beispielsweise die Vorformlinge (1) im Bereich der Heizstrecke (24) von derartigen Handhabungselementen (43) gehaltert sein. Ebenfalls ist eine Anwendung im Bereich des Blasrades (25) möglich. Ebenfalls ist an Anwendungen im Bereich von Abfüllmaschinen gedacht.

Grundsätzlich sind die erläuterten Handhabungselemente (43) überall dort einsetzbar, wo eine stationäre oder dynamische Halterung von Werkstücken erforderlich ist. Die Verwendung ist somit nicht auf die vorstehend detailliert erläuterten Anwendungsbeispiele beschränkt.

Zur Erleichterung einer Herstellung der Handhabungselemente (43) und zur Unterstützung einer einfachen Struktur erstrecken sich die Zangenarme (45, 46) ausgehend von den Verjüngungen (59, 60) in eine der Zangenbasis (47) abgewandte Richtung im Bereich ihrer einander zugewandten Begrenzungen im wesentlichen parallel und mit einem schlitzartigen Abstand zueinander. Der Schlitz endet im Bereich eines von den Greifenden (57, 58) teilweise umschlossenen Aufnahmebereiches. Die Nuten (61, 62) verlaufen im wesentlichen quer zur Längsachse (70).

## Patentansprüche

1. Vorrichtung zur Blasformung von Behältern mit einem Handhabungselement (43) zur Halterung von Vorformlingen (1) oder Behältern (2), wobei das handhbungselement (43) zangenartig ausgebildet und mit zwei Zangenarmen (45,46) versehen its, **dadurch gekennzeichnet**, daβ die Zangenarme (45, 46) gemeinsam mit einer zangenbasis (47) einstückig und aus einem elastischen Material derart ausgebildet sind, daß die zangenbasis (47) im Verbindungsbereich der beiden Zangenarme (45, 46) ein Festkörpergelenk bereitstellt, wobei die Zangenbasis (47) in ein Grundelement (48) eingerastet ist

2. Vorrichtung nach Anspruch 1, **dadurch gekennzeichnet, daß** die Zangenbasis (47) mindestens eine Federzunge (66, 77) zur Arretierung im Bereich einer Aufnahme (63) des Grundelementes (48) aufweist.

3. Vorrichtung nach einem der Ansprüche 1 oder 2, **dadurch gekennzeichnet, daß** die Federzunge (66, 77) manuell entriegelbar ist.

4. Vorrichtung nach einem der Ansprüche 1 bis 3, **dadurch gekennzeichnet, daß** die Zangenbasis (47) und die Zangenarme (45, 46) aus Kunststoff ausgebildet sind.

5. Vorrichtung nach einem der Ansprüche 1 bis 4, **dadurch gekennzeichnet, daß** das Grundelement (48) an einem umlaufenden Förderelement befestigt ist.

6. Vorrichtung nach Anspruch 5, **dadurch** gekenntzeichnet, daß das Förderelement als eine Kette (7) ausgebildet ist.

7. Vorrichtung nach Anspruch 5, **dadurch gekennzeichnet, daß** das Förderelement als ein Übergaberad (41) ausgebildet ist.

8. Vorrichtung nach einem der Ansprüche 1 bis 7, **dadurch gekennzeichnet, daß** das Handhabungselement (43) und das Grundelement (48) Teile eines Heizmoduls der Vorrichtung zur Blasformung von Behältern sind.

9. Vorrichtung nach einem der Ansprüche 1 bis 7, **dadurch gekennzeichnet, daß** das Handhabungselement (43) und das Grundelement (48) Teile eines Blasmoduls der Vorrichtung zur Blasformung von Behältern sind.

10. Vorrichtung nach einem der Ansprüche 1 bis 7, **dadurch gekennzeichnet, daß** das Handhabungselement (43) und das Grundelement (48) Teile eines Blasrades der Vorrichtung zur Blasformung von Behältern sind.

## Claims

1. A device for blow moulding containers having a handling element (43) for holding preforms (1) or containers (2), wherein the handling element (43) is of a gripper-like construction and is provided with two gripper arms (45, 46), **characterised in that** the gripper arms (45, 46) are made from a resilient material in one piece together with a gripper base (47) in such a way that the gripper base (47) provides a solid joint in the connecting region of the two gripper arms (45, 46), wherein the gripper base (47) is latched into a base element (48).

2. A device according to Claim 1, **characterised in that** the gripper base (47) has at least one flexible tongue (66, 77) for catching in the region of a receiving means (63) of the base element (48).

3. A device according to one of Claims 1 or 2, **characterised in that** the flexible tongue (66, 77) may be released manually.

4. A device according to one of Claims 1 to 3, **characterised in that** the gripper base (47) and the gripper arms (45, 46) are made from plastics material.

5. A device according to one of Claims 1 to 4, **characterised in that** the base element (48) is mounted on a circumferential conveying element.

6. A device according to Claim 5, **characterised in that** the conveying element is constructed as a chain (7).

7. A device according to Claim 5, **characterised in that** the conveying element is constructed as a delivery wheel (41).

8. A device according to one of Claims 1 to 7, **characterised in that** the handling element (43) and the base element (48) are parts of a heating module of the device for blow moulding containers.

9. A device according to one of Claims 1 to 7, **characterised in that** the handling element (43) and the base element (48) are parts of a blowing module of the device for blow moulding containers.

10. A device according to one of Claims 1 to 7, **characterised in that** the handling element (43) and the base element (48) are parts of a blowing wheel of the device for blow moulding containers.

## Revendications

1. Dispositif pour le formage par soufflage de conteneurs, qui est doté d'un élément de manipulation (43) pour la préhension de préformes (1) ou de conteneurs (2), sachant que ledit élément de manipulation (43) est configuré en forme de pince et est pourvu de deux branches de pince (45, 46), **caractérisé en ce que** les branches de pince (45, 46) sont formées d'une pièce, en commun avec un socle de pince, et sont en matière élastique, de sorte que le socle de pince (47) présente une articulation dans la zone de jonction des deux branches de pince (45, 46), le socle de pince (47) étant encliqueté dans un élément de base (48) .

2. Dispositif selon la revendication 1, **caractérisé en ce que** le socle de pince (47) présente au moins une languette élastique (66, 77) pour le blocage dans la zone d'un réceptacle (63), pratiqué dans l'élément de base (48).

3. Dispositif selon l'une des revendications 1 ou 2, **caractérisé en ce que** la languette élastique (66, 77) peut être débloquée à la main.

4. Dispositif selon l'une des revendications 1 à 3, **caractérisé en ce que** le socle de pince (47) et les branches de pince (45, 46) sont réalisés en matière synthétique.

5. Dispositif selon l'une des revendications 1 à 4, **caractérisé en ce que** l'élément de base (48) est fixé à un élément de transport périphérique.

6. Dispositif selon la revendication 5, **caractérisé en ce que** l'élément de transport est réalisé sous la forme d'une chaîne (7).

7. Dispositif selon la revendication 5, **caractérisé en ce que** l'élément de transport est réalisé sous la forme d'une roue de transfert (41).

8. Dispositif selon l'une des revendications 1 à 7, **caractérisé en ce que** l'élément de manipulation (43) et l'élément de base (48) font partie d'un module de chauffage du dispositif de formage par soufflage de conteneurs.

9. Dispositif selon l'une des revendications 1 à 7, **caractérisé en ce que** l'élément de manipulation (43) et l'élément de base (48) font partie d'un module de soufflage du dispositif de formage par soufflage de conteneurs.

10. Dispositif selon l'une des revendications 1 à 7, **caractérisé en ce que** l'élément de manipulation (43) et l'élément de base (48) font partie d'une roue de soufflage du dispositif de formage par soufflage de conteneurs.
